# EUROPEAN PATENT SPECIFICATION

(11) **EP 1 606 109 B1**
(45) Date of publication and mention of the grant of the patent: **28.09.2016**
(21) Application number: 04720087.8
(22) Date of filing: 12.03.2004
(51) Int. Cl.: B32B 17/06, B32B 27/36, B32B 17/10, E06B 5/16, E06B 3/66, C03C 27/06, C09K 21/02, E04B 1/94, A62C 2/06, B28B 11/24, C04B 28/26

(54) **FIRE RESISTANT GLAZINGS**
BRANDSCHUTZVERGLASUNGEN
VITRAGES RÉSISTANTS AU FEU

(30) Priority: 19.03.2003 US 306244
(43) Date of publication of application: 21.12.2005
(73) Proprietor: Pilkington Group Limited, Nr. Ormskirk Lancashire L40 5UF (GB)
(72) Inventor: Holden, David William, Wigan, Greater Manchester WN5 8HP (GB); Varma, Karikath Sukumar, Birkdale, Southport PR8 2BE (GB); Dale, Allan Stuart, Wigan, Lancashire WN4 8PT (GB)
(74) Representative: Marsh, Andrew James
(86) International application number: PCT/GB2004/001065
(87) International publication number: WO 2004/082933

(56) References cited:
- EP-A- 0 942 107
- WO-A-01/70495
- WO-A-03/024682
- US-A- 3 336 153
- US-A- 4 175 162
- PATENT ABSTRACTS OF JAPAN vol. 0144, no. 20 (M-1023), 11 September 1990 (1990-09-11) & JP 2 164534 A (SHOWA ELECTRIC WIRE & CABLE CO LTD), 25 June 1990 (1990-06-25)

## Description

This invention relates to bilayer materials useful as interlayers in laminated fire resistant glazing, to process for the production of such laminated glazings and to the laminated glazings themselves.

Fire resistant glass laminates incorporating a waterglass based intumescent interlayer are sold by the Pilkington group of companies under the Trade Marks PYROSTOP and PYRODUR. The laminates are produced by pouring a waterglass solution, typically a sodium silicate solution comprising a weight ratio of SiO2: Na₂O of greater than 3.3 : 1.0 onto the surface of a first glass pane and drying the solution in such a way as to form a clear interlayer. A second pane of glass is then placed on top of the interlayer to form a laminate. Laminates containing more than one interlayer and more than two panes of glass are also produced.

USP 4191805 describes processes for drying these waterglass solutions in a mould formed from a semi-permeable membrane such as cellulose hydrate. Although it is suggested that the bilayer material comprising the dried waterglass and the membrane could be laminated between two glass plies to form a fire resistant glazing these bilayers lack strength and have not been used for this purpose.

In our International Patent Application PCT/GB02/04225 we describe a process which comprises the steps of spreading a vvaterglass solution having a weight ratio of SiO₂: Na₂O of less than 3.3 : 1.0 onto the surface of a flexible backing film drying the solution in situ to form a bilayer material separating a dried waterglass film from the backing material and laminating it between two panes of glass to form a fire resistant glazing. The use of waterglass solutions comprising a reduced amount of silica promotes the formation of a relatively strong flexible dried interlayer. However these processes require the separation of the backing material and the dried interlayer.

EP-A1-1 431 027 represents prior art under the provisions of Article 54(3) EPC only, and discloses a fire protection means integratable into a construction element comprising a hybrid film system in which at least one film is coated with intumescent material.

We have now discovered that a bilayer material comprising a clear flexible backing film and fire resistant layer which is preferably a layer produced by drying a waterglass solution can itself be laminated between two sheets of glass to form a fire resistant glazing. Surprisingly the fire resistant properties of the glazing are not significantly reduced by the introduction of a combustible material i.e. backing film. The use of the bilayer directly in the lamination simplifies the production process .The backing film may also be selected or modified so as to impart useful properties to the glazing.

From a first aspect this invention provides a fire resistant laminated glazing as set out in claim 1.

A wide variety of materials are potentially useful as backing films. In order to be useful the backing material must be unaffected by contact with the fire resistant layer e.g. they must remain optically clear. In the preferred embodiments the fire resistant layer is based upon an alkali metal waterglass and the backing film should be resistant to the action of the dried waterglass interlayer. In a more preferred embodiment the fire resistant layer is produced by pouring a waterglass solution onto the surface of the backing film and the backing film should be one which is resistant to the action of the waterglass solution which is itself strongly alkaline and generally has a pH in the range 10 to 13. The surface of the backing material should be one which can be wetted by the waterglass solution. The backing material will have a smooth surface onto which the waterglass solution can be spread. It will preferably be at least as flexible as the dried film. Preferred backing materials include polymeric films such as formed from polyolefins especially polypropylene, polyethylene naphthalate, polycarbonates, polyesters such as polyethylene terephthalate and polytetrafluoroethylene (PTFE) and copolymers thereof.

The film is preferably one which is impervious to an aqueous solution and in particular to an aqueous waterglass solution. The film will preferably be from 10 to 200 microns thick.

The waterglass solutions useful in the processes of the present invention are those which can be dried to form a clear pseudo plastic flexible film. In glazings according to the present invention the fire resistant layer is derived from sodium silicate waterglasses wherein the weight ratio SiO₂:Na₂O is less than 3.3:1 and more preferably less than 3.0:1. Other alkali metal waterglasses especially potassium silicate waterglasses and lithium silicate waterglasses are also useful in the compositions of this invention. Mixtures of a sodium silicate waterglass with either or both of a potassium silicate waterglass and/or a lithium silicate are also useful in the processes of the present invention. The preferred sodium silicate waterglasses are those wherein the weight ratio SiO₂: Na₂O is at least 2.0:1, more preferably at least 2.5:1 and most preferably those wherein this ratio has a value which is in the range 2.5:1 to 3.0:1. Sodium silicate waterglasses having a weight ratio SiO₂:Na₂O of 2.0:1, 2.5:1, 2.85:1 and 3.3:1 are available as articles of commerce. Waterglass having a weight ratio SiO₂:Na₂O other than these specific values may be produced by blending the appropriate quantities of the commercially available solutions.

Where the waterglass solution comprises a mixture of sodium with potassium and/or lithium silicate waterglasses we prefer that the molar ratio of sodium ions to that of potassium and/or lithium ions is at least 2:1. Where a potassium silicate waterglass is used the molar ratio of sodium to potassium is preferably at least 4:1. Where a potassium silicate waterglass is present it will preferably have a weight ratio SiO₂:K₂O in the range 1.43:1 to 2.05:1.

The solutions useful in the processes of this embodiment of the invention preferably further comprise a polyhydric organic compound. The presence of such a compound improves the flexibility of the dried interlayer. Examples of useful polyhydric compound include glycerol, ethylene glycol and monosaccharides and polysaccharides such as sorbitol. The preferred polyhydric compound for use in the processes of the present invention is glycerol.

The waterglass solution will preferably comprise at least 6% more preferably at least 8% and most preferably at least 10% by weight of the polyhydric compound prior to drying. The incorporation of excessive quantities of polyhydric compound can have a deleterious effect upon the properties of the dried interlayer and for this reason we prefer that the solution comprises no more than 20% by weight of an organic polyhydric compound. The preferred solutions comprise from 6 to 10% and more preferably from 7 to 9% by weight of glycerol.

The amount of water in the solution prior to drying may vary through a wide range provided the solution is clear and stable. In general the solutions will comprise from 30 to 70%, by weight of water.

The solution is spread upon the surface of a flexible backing material. The backing material may be supported on a flat rigid surface and maintained under tension so as to avoid any wrinkling or sagging when the solution is spread on top of it.

The amount of waterglass solution which is poured onto the backing material will be sufficient to provide the desired thickness of flexible interlayer after the drying step. In general we prefer to use an amount such that the depth of the wet solution on the backing material prior to the drying step is from 0.5 to 2.5mm and preferably from 1.0 to 1.5mm. In order to retain that quantity of solution on the surface of the backing material it may be necessary to provide an edge barrier defining the area to be coated which is mounted in a liquid tight fashion on the surface of the backing material and is sufficiently high to retain the desired depth of solution.

The ability of the waterglass solution to wet out on the surface of the backing materials is a significant factor in selecting a backing material. If the ability of the solution to wet the surface is too low the solution may form islands on the surface of the backing material and the dried film may not take the form of a continuous sheet or will take the form of a film having non-uniform thickness. If the solution wets the surface of the backing material too well it may be difficult to form a flexible film having the desired thickness. In general we prefer to use backing materials which have a surface energy of less than 76 and more preferably less than 50 dynes/cm.

We have discovered that the incorporation of a surfactant into the waterglass solution may improve the ability of the solution to wet a surface. The introduction of a surfactant into the waterglass solution alters its surface energy and thereby its tendency to spread on the surface of a substrate. The surfactants which are useful in this embodiment of the invention must be chemically stable in the solution and in the dried film, will preferably be miscible with the solution and will not detract significantly from the transparency of the dried flexible film. In general non-ionic surfactants and in particular polyhydroxy non-ionic surfactants are preferred for present use. A particularly preferred class of surfactants are the alkyl glucosides. The utility of any particular surfactant in any particular solution may be determined by routine experiment.

The quantity of surfactant used will generally be that which is sufficient to achieve the desired degree of wetting on the backing material. This amount may be determined empirically. The use of excessive quantities of surfactant tends to give rise to the formation of hazy dried films and is thereby less preferred. In general the quantity of surfactant used will be from 0.0001 to 0.1% by weight of the waterglass solution.

The waterglass solutions may comprise additional materials which are known to be useful as components of the dried interlayer. For example they may comprise a compatible zirconium containing aggregate of the type described in our International application WO 01/10638 and in particular potassium zirconium carbonate and complexes of zirconium with citric acid and glycerol of the type described in British Patent 2226024. Another useful class of additives are the salts of carbonic acid or α hydroxy carboxylic acids such as citric acid including those described in our International Patent application WO 01/24445. Another useful class of additives are those which may be formed by the addition of an alkali metal aluminate and an α hydroxy carboxylic acid such as citric acid as described in our pending UK patent application 0218672.4. The aluminate and citrate must be mixed with the waterglass under controlled conditions with thorough mixing to produce a solution which is clear and can be dried to form a clear interlayer according to the present invention.

The surface of the backing film may be pretreated so as to facilitate the wetting out of the waterglass solution. Treatment with a primer or with a silane may be used in preference to or in combination with the presence of a surfactant in the waterglass solution to allow waterglass solution to wet the surface of the film to the desired degree. The surface of the backing film may also be provided with a protective coating e.g. of metal oxide and this may also vary the surface energy of the film and thereby affect the wetting out of the waterglass solution.

The reverse side of the backing film i.e. the side which is not wetted with the waterglass solution is provided with a coating of a pressure sensitive adhesive. The adhesive is selected so as to bond this reverse face of the backing film to a sheet of glass during the lamination step. The selection of a suitable adhesive may be determined empirically. Examples of useful types of adhesives include acrylic and silicone based adhesives. The adhesive may be applied using conventional techniques such as rolling or brushing. A removable release liner is preferably applied over the adhesive layer in order to permit the bilayer to be handled and if necessary rolled and stored prior to the lamination step. A bilayer materials comprising a clear waterglass film and a flexible backing material wherein said backing material has a pressure sensitive adhesive layer on the reverse side is believed to be novel and constitutes a further aspect of the present invention. The adhesive may be applied to the reverse side of the backing film immediately prior to the lamination step or the adhesive can be applied to the surface of the glass and the bilayer placed to top of the adhesive. In some embodiments outside the scope of the present invention the bilayer may be used without adhesive in which event the lamination is preferably carried out in an autoclave so as to bond the bilayer to the glasses.

In order to produce a clear transparent waterglass film which is free from bubbles and other optical imperfections it is necessary to dry the waterglass solution under carefully controlled conditions. The water content of the solution is reduced in the drying step and the water content of the dried film is generally in the range 10 to 35%. The temperature of the solution, composition of the atmosphere above it and the Relative Humidity in that atmosphere will be controlled with care during the drying step. These parameters may vary over the course of the drying process so as to optimise the properties and the homogeneity of the dried film. In a preferred embodiment the solution may be heated from both above and below so as to avoid the entrapment of excessive quantities of water in the elastomeric material. In the preferred embodiments the process may be carried out by laying the flexible backing material on a heat conductive support such as a metal plate.

The drying process may be carried out statically or dynamically. In a preferred embodiment the process is carried out dynamically in a continuous manner by spreading a waterglass solution onto the surface of a belt of flexible backing material which is being fed to the process from a feed roll. The belt then passes through a heating zone where it is dried and a film of clear pseudo plastic material is produced on the coated surface. The conditions within the heating zone and optionally within different parts of the heated zone and the speed at which the belt passes through the beating zone are controlled so as to produce a useful film.. The heating zone may be heated using radiant heat or convected heat. The temperature within the heating zone will generally be in the range 80° C to 150° C. The heating zone may be divided into two or more zones each of which is maintained at its own temperature and humidity. The drying time may vary through a wide range but will generally be from 20 to 200 minutes. The product comprises a bilayer material comprising the backing material and the flexible film.

### Example 1

An aqueous waterglass solution was made up by mixing the following components.

70.9 parts by weight of a sodium silicate Solution having a weight ratio SiO₂:Na₂O of 2.85:1 comprising 33.9% solids produced by diluting a sodium silicate solution sold by Clariant France S.A as Clariant PL 1548 having a weight ratio of SiO₂ : Na₂O of 3.3:1 with pure sodium hydroxide.

20 parts by weight of a potassium silicate solution having a weight ratio SiO₂:K₂O of 1.43:1 comprising 52.4% by weight solids, sold by the Crosfield Company as Crystal K120 Potassium Silicate.

9 parts by weight of glycerol.

0.1 parts by weight of an alkyl glucoside surfactant

The compounds were mixed and formed a clear solution. That solution was poured onto a polypropylene film supported upon a steel belt in a quantity sufficient to provide a depth of 1.5mm. The wet film was passed through a heating zone wherein the temperature was in the range 80 to 140°C and the Relative Humidity varied from 5 to 70%. The film was moved through the zone over a period of 60 minutes. The water content of the dried flexible film product was approximately 22% by weight. The film had a thickness of 0.5mm.

### Example 2

A solution comprising a sodium aluminate, a sodium silicate waterglass, a potassium silicate waterglass and citric acid was made up using the following components:-
1 A solution of a sodium silicate waterglass having a weight ration SiO₂:Na₂O of 2.85:1 and comprising 40% by weight of solids, sold by INEOS as Crystal 96.
2 A solution of a potassium silicate waterglass having a weight ration of SiO₂:K₂O of 1.43:1 comprising 52.4% by weight of solids; sold by INEOS as Crystal K120 potassium silicate
3 An aqueous solution of sodium aluminate comprising 38.0% by weight solids sold by Nordisk Aluminate
4 Glycerol - an 87% by weight solution in water
5 Citric acid - reagent grade

### The solutions were made up as follows :-

First 5 parts by weight of citric acid were added to 10 parts by weight of glycerol with stirring so that the citric acid dissolved. The resulting solution was added slowly with vigorous stirring to 89.86 parts by weight of the sodium aluminate solution. The temperature of the solution was maintained below 50°C throughout the addition. The resulting solution had a pH of 9.5.

A waterglass solution comprising a sodium silicate, a potassium silicate and glycerol was made up by mixing 151.7 parts by weight of Crystal 96 with 44.3 parts by weight of Crystal K120 and 20.5 parts by weight of glycerol.

A waterglass solution comprising a sodium silicate , a potassium silicate and glycerol was made up by mixing 151.7 parts by weight of Crystal 96 with 44.3 parts by weight of Crystal K120 and 20.5 parts by weight of glycerol.

The mixed solution comprising the aluminate was then added to the waterglass solution. The addition was carried out by slowly adding the aluminate solution with thorough mixing using a Silverson high shear mixer. The resulting solution was clear and was stable on storage at room temperature.

The solution was poured onto a roll of a polyester film which mounted upon two rollers positioned upon either side of an oven. The film was drawn through the heating zone. The solution was poured onto the film at a point adjacent to the entrance to the oven. The film was drawn across the surface of a stainless steel table mounted within the oven. The oven was heated using convected air and was maintained at a temperature of 100° C. The residence time in the oven was 120 minutes.

The product which was drawn from the oven was a clear bilayer film. The dried interlayer had a water content of 25 %.

The bilayer was placed upon the surface of a 300mm² pane of a 3mm thick soda lime float glass. The layer was flattened manually so as to lie smoothly on the glass and the excess of the bilayer was trimmed from the edge of the glass. A solution of glycerol was used to wet the upper surface of the fire resistant layer. A top pane of glass was placed on top of the bilayer and the laminate produced passed through a set of nip rollers. The laminate was placed in an oven at a temperature of 80°C for a period of 4 hours.

## Claims

1. A fire resistant laminated glazing comprising at least two plies of transparent material separated by at least one interlayer **characterised in that** the interlayer comprises a bilayer comprising a flexible backing film and a fire resistant layer derived from an alkali metal silicate having a weight ratio of SiO₂ : Na₂O of less than 3.3 : 1, and **in that** one side of the backing film is coated with a pressure sensitive adhesive.

2. A glazing according to claim 1 **characterised in that** the flexible backing film is formed from a polymeric material.

3. A glazing according to claim 2 **characterised in that** the polymeric material is selected from the group comprising polyolefins, polyethylene naphthalate, polycarbonates, polyesters, polytetrafluouroethylene and copolymers thereof.

4. A glazing according to any of the preceding claims **characterised in that** one surface of the backing film has been modified so as to vary the surface energy thereof.

5. A glazing according to any of the preceding claims **characterised in that** the fire resistant interlayer comprises an alkali metal waterglass.

6. A glazing according to any of the preceding claims wherein the alkali metal waterglass is a sodium silicate waterglass having a weight ratio SiO₂:Na₂O of from 2.5:1 to 3.0:1.

7. A glazing according to any of the preceding claims **characterised in that** the fire resistant layer comprises form 10 to 35% by weight of water.

8. A glazing according to any of claims 5-7 **characterised in that** the fire resistant layer comprises from 12 to 40% by weight of a polyhydric compound.

9. A glazing according to claim 8 **characterised in that** the polyhydric compound is glycerol.

10. A process for the production of a laminated fire resistant glazing which comprises the steps of spreading an alkali metal waterglass solution upon the surface of a transparent flexible backing film, drying said waterglass solution so as to form a bilayer material comprising said backing film and a clear intumescent interlayer and placing said bilayer between two opposed panes to form a laminated glazing, **characterised in that** the laminate is formed by laying the bilayer material on the surface of the bottom glass with the backing film in contact with the said glass and **in that** the backing film has a pressure sensitive adhesive on the underside and that it is secured to the bottom glass by the application of pressure.

11. A process according to claim 10 **characterised in that** the upper surface of the flexible backing film is treated with a primer prior to the application of the waterglass solution.

12. A process according to either of claims 10 or 11 **characterised in that** the bilayer material is formed by spreading the waterglass on the backing film and drawing said film through a heating zone.

13. A process according to any of claims 10 to 12 **characterised in that** a top glass is placed upon the intumescent interlayer to form the laminate.

14. A process according to claim 13 **characterised in that** glycerol is spread upon the surface of the interlayer prior to the placement of the top glass.

15. A process according to claim 14 **characterised in that** the laminate is passed through a set of rollers.

16. A process according to any of claims 10 to 14 **characterised in that** the laminate is heated at a temperature of 50°C to 100°C for a period of from 60 to 500 minutes.

17. A bilayer material comprising a clear waterglass film and a clear flexible backing material **characterised in that** the reverse surface of the backing material is coated with a pressure sensitive adhesive.

18. A material according to claim 17 **characterised in that** the adhesive coating is covered with a removable release paper.

## Patentansprüche

1. Laminierte Brandschutzverglasung, die mindestens zwei Lagen aus transparentem Material umfasst, die durch mindestens eine Zwischenschicht voneinander getrennt sind, **dadurch gekennzeichnet, dass** die Zwischenschicht eine Doppelschicht umfasst, die eine flexible Trägerfolie und eine Brandschutzschicht umfasst, die von einem Alkalimetallsilicat abgeleitet ist, das ein Gewichtsverhältnis von SiO₂ : Na₂O kleiner als 3,3 : 1 aufweist, und dass eine Seite der Trägerfolie mit einem druckempfindlichen Klebstoff beschichtet ist.

2. Verglasung nach Anspruch 1, **dadurch gekennzeichnet, dass** die flexible Trägerfolie aus einem Polymermaterial gebildet ist.

3. Verglasung nach Anspruch 2, **dadurch gekennzeichnet, dass** das Polymermaterial aus der Gruppe ausgewählt ist, die Polyolefine, Polyethylennaphthalat, Polycarbonate, Polyester, Polytetrafluorethylen und Copolymere davon umfasst.

4. Verglasung nach einem der vorhergehenden Ansprüche, **dadurch gekennzeichnet, dass** eine Oberfläche der Trägerfolie so modifiziert worden ist, dass die Oberflächenenergie davon verändert ist.

5. Verglasung nach einem der vorhergehenden Ansprüche, **dadurch gekennzeichnet dass** die Brandschutzzwischenschicht ein Alkalimetallwasserglas umfasst.

6. Verglasung nach einem der vorhergehenden Ansprüche wobei das Alkalimetallwasserglas ein Natriumsilicatwasserglass ist, das ein Gewichtsverhältnis SiO₂:Na₂O im Bereich von 2,5:1 bis 3,0:1 aufweist.

7. Verglasung nach einem der vorhergehenden Ansprüche, **dadurch gekennzeichnet, dass** die Brandschutzschicht 10 bis 35 Gew.-% Wasser umfasst.

8. Verglasung nach einem der Ansprüche 5-7, **dadurch gekennzeichnet, dass** die Brandschutzschicht 12 bis 40 Gew.-% einer Verbindung mit mehreren Hydroxygruppen umfasst.

9. Verglasung nach Anspruch 8, **dadurch gekennzeichnet, dass** die Verbindung mit mehreren Hydroxygruppen Glycerin ist.

10. Verfahren zur Herstellung einer laminierten Brandschutzverglasung, das die folgenden Schritte umfasst: Verteilen einer Alkalimetallwasserglaslösung auf der Oberfläche einer transparenten flexiblen Trägerfolie, Trocknen der Wasserglaslösung, um ein Doppelschichtmaterial zu bilden, das die Trägerfolie und eine klare intumeszente Zwischenschicht umfasst, und Anordnen der Doppelschicht zwischen zwei gegenüberliegenden Scheiben, um eine laminierte Verglasung zu bilden, **dadurch gekennzeichnet, dass** das Laminat gebildet wird, indem das Doppelschichtmaterial auf die Oberfläche des unteren Glases mit der Trägerfolie im Kontakt mit diesem Glas gelegt wird und dass die Trägerfolie einen druckempfindlichen Klebstoff auf der Unterseite aufweist und dass sie durch die Anwendung von Druck auf dem unteren Glas befestigt wird.

11. Verfahren nach Anspruch 10, **dadurch gekennzeichnet, dass** die obere Oberfläche der flexiblen Trägerfolie vor dem Auftragen der Wasserglaslösung mit einem Primer behandelt wird.

12. Verfahren nach Anspruch 10 oder 11, **dadurch gekennzeichnet, dass** das Doppelschichtmaterial durch Verteilen des Wasserglases auf der Trägerfolie und Hindurchziehen der Folie durch eine Heizzone gebildet wird.

13. Verfahren nach einem der Ansprüche 10 bis 12, **dadurch gekennzeichnet, dass** ein Deckglas auf der intumeszenten Schicht angeordnet wird, um das Laminat zu bilden.

14. Verfahren nach Anspruch 13, **dadurch gekennzeichnet, dass** vor dem Anordnen des Deckglases Glycerin auf der Oberfläche der Zwischenschicht verteilt wird.

15. Verfahren nach Anspruch 14, **dadurch gekennzeichnet, dass** das Laminat durch einen Satz Walzen hindurchgeführt wird.

16. Verfahren nach einem der Ansprüche 10 bis 14, **dadurch gekennzeichnet, dass** das Laminat über einen Zeitraum von 60 bis 500 min auf eine Temperatur von 50 °C bis 100 °C erhitzt wird.

17. Doppelschichtmaterial, das eine klare Wasserglasschicht und ein klares flexibles Trägerfolienmaterial umfasst, **dadurch gekennzeichnet, dass** die rückseitige Oberfläche des Trägermaterials mit einem druckempfindlichen Klebstoff beschichtet ist.

18. Material nach Anspruch 17, **dadurch gekennzeichnet, dass** die Klebestoffbeschichtung mit einem entfernbaren Abziehpapier bedeckt ist.

## Revendications

1. Vitrage stratifié résistant au feu comprenant au moins deux feuillets de matériau transparent séparés par au moins une couche intermédiaire, **caractérisé en ce que** la couche intermédiaire comprend une bicouche comprenant un film de support flexible et une couche résistant au feu provenant d'un silicate de métal alcalin ayant un rapport en poids de SiO₂ : Na₂O de moins de 3,3 : 1, et **en ce qu'**un côté du film de support est revêtu d'un adhésif autocollant.

2. Vitrage selon la revendication 1, **caractérisé en ce que** le film de support flexible est formé d'un matériau polymère.

3. Vitrage selon la revendication 2, **caractérisé en ce que** le matériau polymère est choisi dans le groupe comprenant des polyoléfines, du polyéthylène naphtalate, des polycarbonates, des polyesters, du polytétrafluoroéthylène et leurs copolymères.

4. Vitrage selon l'une quelconque des revendications précédentes, **caractérisé en ce qu'**une surface du film de support a été modifiée de façon à faire varier l'énergie de surface de celle-ci.

5. Vitrage selon l'une quelconque des revendications précédentes, **caractérisée en ce que** la couche intermédiaire résistant au feu comprend un verre soluble de métal alcalin.

6. Vitrage selon l'une quelconque des revendications précédentes, dans lequel le verre soluble de métal alcalin est un verre soluble de silicate de sodium ayant un rapport en poids de SiO₂ : Na₂O de 2,5 : 1 à 3,0 : 1.

7. Vitrage selon l'une quelconque des revendications précédentes, **caractérisé en ce que** la couche résistant au feu comprend de 10 à 35 % en poids d'eau.

8. Vitrage selon l'une quelconque des revendications 5 à 7, **caractérisé en ce que** la couche résistant au feu comprend de 12 à 40 % en poids d'un composé polyhydrique.

9. Vitrage selon la revendication 8, **caractérisé en ce que** le composé polyhydrique est le glycérol.

10. Procédé de production d'un vitrage stratifié résistant au feu qui comprend les étapes d'étalement d'une solution de verre soluble de métal alcalin sur la surface d'un film de support flexible transparent, le séchage de ladite solution de verre soluble de façon à former un matériau bicouche comprenant ledit film de support et une couche intermédiaire translucide intumescente et le placement de ladite bicouche entre deux vitres opposées pour former un vitrage stratifié, **caractérisé en ce que** le stratifié est formé en posant le matériau bicouche sur la surface du verre inférieur avec le film de support en contact avec ledit verre et **en ce que** le film de support a un adhésif autocollant sur la face inférieure et **en ce qu'**il est fixé au verre inférieur par l'application d'une pression.

11. Procédé selon la revendication 10, **caractérisé en ce que** la surface supérieure du film de support flexible est traitée avec un enduit avant l'application de la solution de verre soluble.

12. Procédé selon l'une quelconque des revendications 10 ou 11, **caractérisé en ce que** le matériau bicouche est formé en étalant le verre soluble sur le film de support et en tirant ledit film dans une zone chauffante.

13. Procédé selon l'une quelconque des revendications 10 à 12, **caractérisé en ce qu'**un verre supérieur est placé sur la couche intermédiaire intumescente pour former le stratifié.

14. Procédé selon la revendication 13, **caractérisé en ce que** du glycérol est étalé sur la surface de la couche intermédiaire avant le placement du verre supérieur.

15. Procédé selon la revendication 14, **caractérisé en ce que** le stratifié passe dans un ensemble de rouleaux.

16. Procédé selon l'une quelconque des revendications 10 à 14, **caractérisé en ce que** le stratifié est chauffé à une température de 50 °C à 100 °C pendant une durée de 60 à 500 minutes.

17. Matériau bicouche comprenant un film de verre soluble translucide et un matériau de support flexible translucide, **caractérisé en ce que** la surface envers du matériau de support est revêtue d'un adhésif autocollant.

18. Matériau selon la revendication 17, **caractérisé en ce que** le revêtement adhésif est couvert d'un papier détachable.
